# EUROPÄISCHE PATENTANMELDUNG

(11) **EP 4 588 698 A1**
(43) Veröffentlichungstag der Anmeldung: **23.07.2025**
(21) Anmeldenummer: 24220486.5
(22) Anmeldetag: 17.12.2024
(51) Int. Cl.: B60H 1/00, F16L 25/00, F16L 25/10, F16L 37/02, B29C 49/02, B29C 51/10

(54) **LUFTFÜHRUNGSSYSTEM FÜR EIN KRAFTFAHRZEUG**

(30) Priorität: 20.12.2023 DE 202023107535 U
(71) Anmelder: REHAU Automotive SE & Co. KG, 95111 Rehau (DE)
(72) Erfinder: Brendel, Manuel, 08523 Plauen (DE); Walters, Gerhard, 95182 Döhlau OT Tauperlitz (DE)

(57) **Zusammenfassung**

Luftführungssystem für ein Fahrzeug, umfassend wenigstens zwei Luftführungskanäle, wobei sich die Luftführungskanäle in einem gemeinsamen Verbindungsbereich derart überlappen, dass ein erster Verbindungsabschnitt (4) des ersten Luftführungskanals von einem zweiten Verbindungsabschnitt (5) des zweiten Luftführungskanals umschlossen ist und, wobei die Verbindungsabschnitte (4, 5) einander entsprechende polygonale Querschnitte aufweisen, und wobei die Verbindungsabschnitte (4, 5) über wenigstens eine im Verbindungsbereich vorgesehene Rastverbindung lösbar miteinander verbunden sind, wobei die Rastverbindung aus einem in dem ersten Verbindungsabschnitt (4) ausgeformten Rastelement (7) und einem in dem zweiten Verbindungsabschnitt (5) ausgeformten Gegenrastelement (8) gebildet ist, wobei die Verbindungsabschnitte (4, 5) einander entsprechende polygonale Querschnitte mit jeweils wenigstens zwei Ecken (9b, 10a, 10b, 11a, 11b, 12a, 12b) aufweisen, wobei das Rastelement (7) und das Gegenrastelement (8) jeweils auf wenigstens einer der jeweiligen, aneinander anliegenden Ecken (9b, 10a, 10b) der Verbindungsabschnitte (4, 5) angeordnet sind, wobei in dem gemeinsamen Verbindungsbereich zusätzlich wenigstens ein Anschlagssystem aus einem in dem ersten Verbindungsabschnitt (4) ausgeformten Anschlagelement (14) und einem in dem zweiten Verbindungsabschnitt (5) ausgeformten Gegenanschlagelement (15) vorgesehen ist, wobei das Anschlagselement (14) und das Gegenanschlagselement (15) ebenfalls auf wenigstens einer der jeweiligen, aneinander anliegenden Ecken (11a, 11b, 12a, 12b) der Verbindungsabschnitte (4, 5) angeordnet sind, wobei die Rastverbindung und das Anschlagssystem so aufeinander abgestimmt sind, dass nach dem Einrasten der Rastverbindung das Anschlagselement (14) und das Gegenanschlagselement (15) eine definierte Endposition der Rastverbindung vorgeben, um ein Überrasten der Rastverbindung zu verhindern.

## Beschreibung

Die vorliegende Erfindung betrifft ein Luftführungssystem für ein Fahrzeug, umfassend wenigstens zwei in einem Blasformungsverfahren oder 2-Platten-Thermoformungsverfahren hergestellte Luftführungskanäle, wobei sich die Luftführungskanäle in einem gemeinsamen Verbindungsbereich derart überlappen, dass ein erster Verbindungsabschnitt des ersten Luftführungskanals von einem zweiten Verbindungsabschnitt des zweiten Luftführungskanals umschlossen ist und, wobei die Verbindungsabschnitte einander entsprechende polygonale Querschnitte aufweisen, und wobei die Verbindungsabschnitte über wenigstens eine im Verbindungsbereich vorgesehene Rastverbindung lösbar miteinander verbunden sind, wobei die Rastverbindung aus einem in dem ersten Verbindungsabschnitt ausgeformten Rastelement und einem in dem zweiten Verbindungsabschnitt ausgeformten Gegenrastelement gebildet ist, wobei die Verbindungsabschnitte einander entsprechende polygonale Querschnitte mit jeweils wenigstens zwei Ecken aufweisen, wobei das Rastelement und das Gegenrastelement jeweils auf wenigstens einer der jeweiligen, aneinander anliegenden Ecken der Verbindungsabschnitte angeordnet sind.

Ein gattungsgemäßes Luftführungssystem ist in der Druckschrift EP 3 034 337 B1 offenbart.

Nachteilig an einem Luftführungssystem gemäß dem Stand der Technik ist, dass mitunter sehr hohe Kräfte benötigt werden, damit die Rastelemente und die Gegenrastelemente miteinander verrasten. Dies ist zwar insofern vorteilhaft, dass die Demontagekräfte, und somit die Verbindungsfestigkeit, entsprechend hoch ist. Jedoch kann es insbesondere bei einer händischen Montage des Luftführungssystems dazu kommen, dass der Monteur bzw. die Monteurin die benötigten Montagekräfte überschätzt, und die Luftkanäle so weit zusammensteckt, dass die Rastverbindung überrastet wird - also in Fügerichtung zunächst ordnungsgemäß einrastet, dann die Luftführungskanäle jedoch soweit weiter ineinander geschoben werden, dass die Rastverbindung wieder gelöst wird.

Die Aufgabe der Erfindung besteht daher in der Schaffung eines Luftführungssystem für ein Fahrzeug, das gegenüber dem Stand der Technik eine montagesicherere Fügung der Verbindungsabschnitte gewährleistet.

Diese Aufgabe wird erfindungsgemäß durch ein Luftführungssystem für ein Fahrzeug erfüllt, umfassend wenigstens zwei in einem Blasformungsverfahren oder 2-Platten-Thermoformungsverfahren hergestellte Luftführungskanäle, wobei sich die Luftführungskanäle in einem gemeinsamen Verbindungsbereich derart überlappen, dass ein erster Verbindungsabschnitt des ersten Luftführungskanals von einem zweiten Verbindungsabschnitt des zweiten Luftführungskanals umschlossen ist und, wobei die Verbindungsabschnitte einander entsprechende polygonale Querschnitte aufweisen, und wobei die Verbindungsabschnitte über wenigstens eine im Verbindungsbereich vorgesehene Rastverbindung lösbar miteinander verbunden sind, wobei die Rastverbindung aus einem in dem ersten Verbindungsabschnitt ausgeformten Rastelement und einem in dem zweiten Verbindungsabschnitt ausgeformten Gegenrastelement gebildet ist, wobei die Verbindungsabschnitte einander entsprechende polygonale Querschnitte mit jeweils wenigstens zwei Ecken aufweisen, wobei das Rastelement und das Gegenrastelement jeweils auf wenigstens einer der jeweiligen, aneinander anliegenden Ecken der Verbindungsabschnitte angeordnet sind, wobei in dem gemeinsamen Verbindungsbereich zusätzlich wenigstens ein Anschlagssystem aus einem in dem ersten Verbindungsabschnitt ausgeformten Anschlagelement und einem in dem zweiten Verbindungsabschnitt ausgeformten Gegenanschlagelement vorgesehen ist, wobei das Anschlagselement und das Gegenanschlagselement ebenfalls auf wenigstens einer der jeweiligen, aneinander anliegenden Ecken der Verbindungsabschnitte angeordnet sind, wobei die Rastverbindung und das Anschlagssystem so aufeinander abgestimmt sind, dass nach dem Einrasten der Rastverbindung das Anschlagselement und das Gegenanschlagselement eine definierte Endposition der Rastverbindung vorgeben, um ein Überrasten der Rastverbindung zu verhindern.

Erfindungsgemäß wurde erkannt, dass das Vorsehen eines Anschlagsystems auf wenigstens einer der jeweiligen, aneinander anliegenden Ecken der Verbindungsabschnitte im Moment des Einrastens der wenigstens einen Rastverbindung einen zusätzlichen Widerstand gegen das Überrasten dieser Rastverbindung erzeugt.

Das Gegenanschlagselement kann insbesondere als eine lokale Einbuchtung der Außenfläche des zweiten Verbindungsabschnitts im Bereich der jeweiligen Ecke, und das

Anschlagselement als ein, an einen abgeflachten Bereich der jeweiligen Ecke des ersten Verbindungsabschnitts anschließender Rücksprung auf die ursprüngliche Höhe der Ecke ausgebildet sein.

Das jeweilige Rastelement und das jeweilige Gegenrastelement, sowie das Anschlagelement und das Gegenanschlagelement können bevorzugt einstückig mit den entsprechenden Verbindungsabschnitten ausgeformt sein. Dies bedeutet, dass das Rastelement und das Anschlagelement mit dem ersten Verbindungsabschnitt einstückig ausgeformt und das Gegenrastelement und das Gegenanschlagelement einstückig mit dem zweiten Verbindungsabschnitt ausgeformt sind.

Das Ausformen erfolgt insbesondere bereits bei der Herstellung der Luftführungskanäle im Blasformungsverfahren oder 2-Platten-Thermoformungsverfahren.

Das Rastelement kann insbesondere durch eine lokale Einbuchtung oder eine lokale Ausbuchtung der Außenfläche des ersten Verbindungsabschnitts gebildet sein. Das Gegenrastelement kann insbesondere durch eine lokale Ausbuchtung oder eine lokale Einbuchtung der Innenfläche des zweiten Verbindungsabschnittes gebildet sein. Die Einbuchtung und / oder die Ausbuchtung kann / können hierbei jeweils linienförmig ausgebildet sein. Linienförmig bedeutet in diesem Zusammenhang, dass der Grund der Einbuchtung bzw. der Sattel der Ausbuchtung eine Linie bildet. Die Einbuchtung und / oder die Ausbuchtung ist / sind bevorzugt direkt auf der jeweiligen Ecke der Verbindungsabschnitte gebildet.

Die linienförmige Einbuchtung und / oder die linienförmige Ausbuchtung ist / sind bevorzugt parallel zum Öffnungsrand des entsprechenden Verbindungsabschnittes orientiert.

Zur vereinfachten Verbindbarkeit der Luftführungskanäle kann der Öffnungsrand des außenliegenden zweiten Luftführungskanals und / oder der Öffnungsrand des innenliegenden ersten Luftführungskanals zumindest abschnittsweise eine Einführschräge aufweisen. Ein Längsschnitt der Einführschräge weist hierbei bevorzugt wenigstens zwei sich voneinander unterscheidende Steigungen der Einführschräge auf. Bevorzugt wird die Steigung hierbei in Montagerichtung kleiner, so dass bei der zunehmenden Überdeckung der Verbindungsabschnitte die ansonsten zunehmenden Kräfte / Reibungen durch die verringerte Steigung der Einführschräge kompensiert wird und infolge eine weitgehend konstante Montagekraft erzielbar ist. Die Einführschräge kann in einzelnen Abschnitten oder stufenlos oder einer Kurvenbahn folgend eine in Montagerichtung kleiner werdende Steigung aufweisen.

Die Luftführungskanäle sind bevorzugt aus einem thermoplastischen Kunststoff gebildet. Als besonders geeignet haben sich hierbei Polyolefine, insbesondere Polypropylen und Polyethylen (PE-LD, PE-HD) erwiesen.

Die Verbindungsabschnitte können einander entsprechende polygonale Querschnitte mit jeweils vier Ecken aufweisen, wobei das Rastelement und das Gegenrastelement jeweils auf wenigstens zwei der jeweiligen, aneinander anliegenden Ecken der Verbindungsabschnitte angeordnet sind, wobei sich diese Ecken diagonal gegenüberliegen. Hierdurch wird zusätzlich ein unbeabsichtigtes Lösen der Verbindungsabschnitte bei einer seitlichen Krafteinwirkung auf einen der Luftführungskanäle vermieden, da eine hiervon verursachte Drehbewegung - die ansonsten zu einem Lösen der Verbindungsabschnitte führen würde - unterbunden wird, indem das Anschlagsystem diese Drehbewegung stoppt.

Teil der Erfindung ist ferner eine Belüftungs-Heizungs- oder Klimaanlage eines Fahrzeuges mit zumindest einem Gebläse, zumindest einem Luftstromsteuerelement und ggf. zumindest einem Wärmetauscher, wobei die Anlage wenigstens ein vorstehend beschriebenes Luftführungssystem, insbesondere ein Luftführungssystem nach einem der Ansprüche 1 bis 9, aufweist.

Die Erfindung wird anhand der folgenden, lediglich Ausführungsbeispiele darstellender Zeichnungen näher erläutert.

Es zeigen:
- Fig. 1: eine dreidimensionale Teilansicht eines Luftführungssystems vor dessen Zusammenbau;
- Fig. 2: eine dreidimensionale Teilansicht des Luftführungssystems aus Fig. 1 nach dessen Zusammenbau;
- Fig. 3: eine dreidimensionale Teilansicht des Luftführungssystems aus Fig. 1 vor dessen Zusammenbau aus einer anderen Blickrichtung;
- Fig. 4: eine dreidimensionale Teilansicht des Luftführungssystems aus Fig. 1 nach dessen Zusammenbau aus einer anderen Blickrichtung;
- Fig. 5: eine Längsschnittdarstellung durch den Verbindungsbereich des Luftführungssystems gemäß der Schnittlinie A-A aus Fig. 2;
- Fig. 6: eine Längsschnittdarstellung durch den Verbindungsbereich des Luftführungssystems gemäß der Schnittlinie B-B aus Fig. 4.

Gleiche oder funktionsgleiche Elemente sind mit den gleichen Bezugszeichen versehen.

Die nachfolgenden Figuren zeigen ein Luftführungssystem für ein Fahrzeug, umfassend wenigstens zwei in einem Blasformungsverfahren oder 2-Platten-Thermoformungsverfahren hergestellte Luftführungskanäle 1, 2.

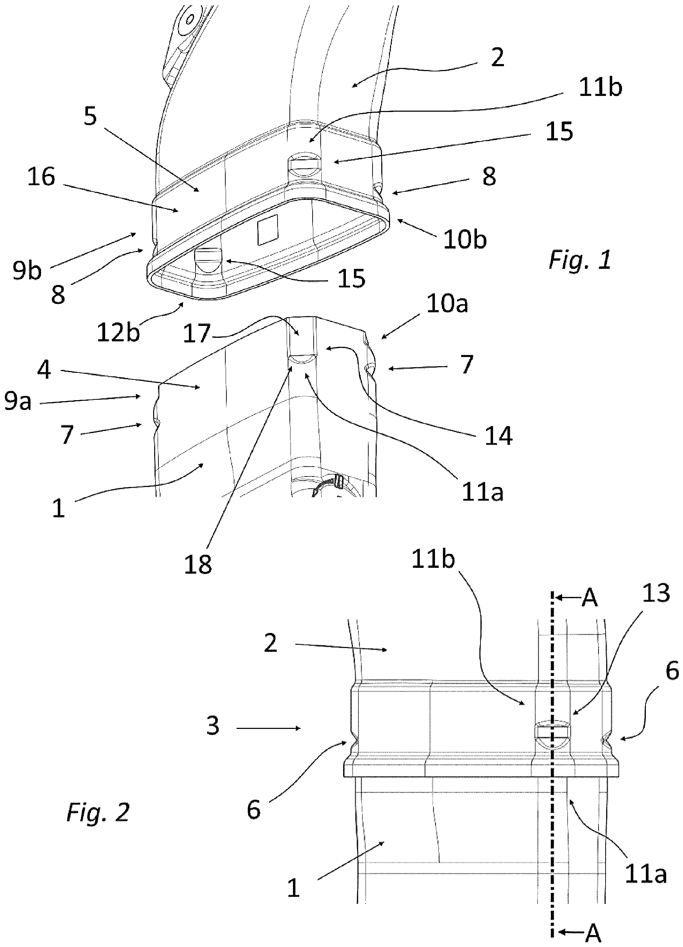

Die Luftführungskanäle 1, 2 überlappen sich derart in einem gemeinsamen Verbindungsbereich 3 derart, dass ein erster Verbindungsabschnitt 4 des ersten Luftführungskanals 1 von einem zweiten Verbindungsabschnitt 5 des zweiten Luftführungskanals 2 umschlossen ist (vgl. Fig. 2, Fig. 4 sowie Fig. 5 und Fig. 6).

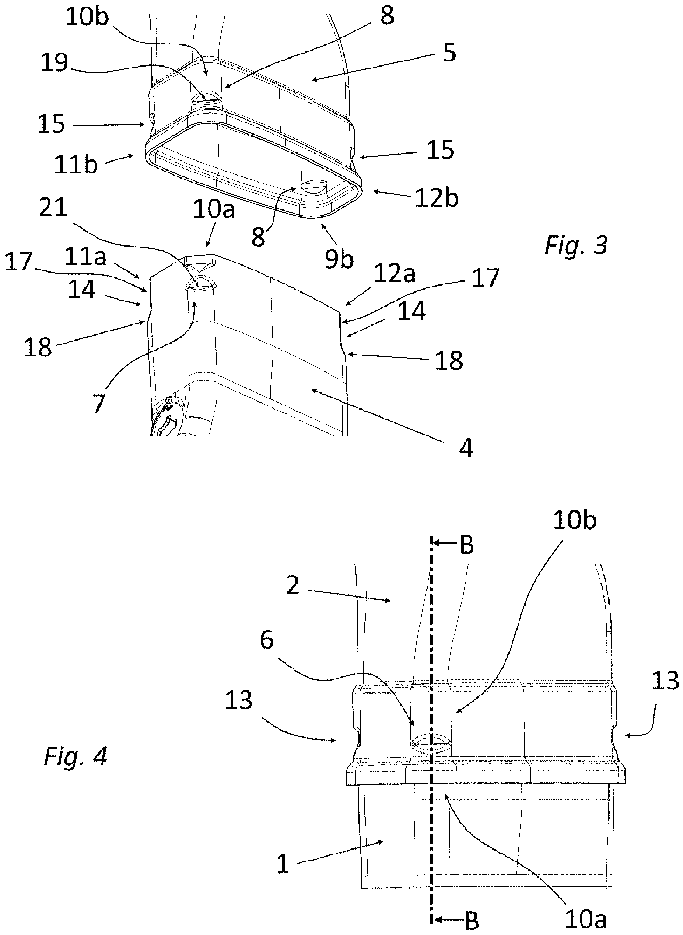

Die Verbindungsabschnitte 4, 5 wiesen einander entsprechende polygonale Querschnitte aufweisen, wie beispielsweise in den Fig. 1 und Fig. 3 ersichtlich, die die beiden Luftführungskanäle vor deren Verbindung zeigen.

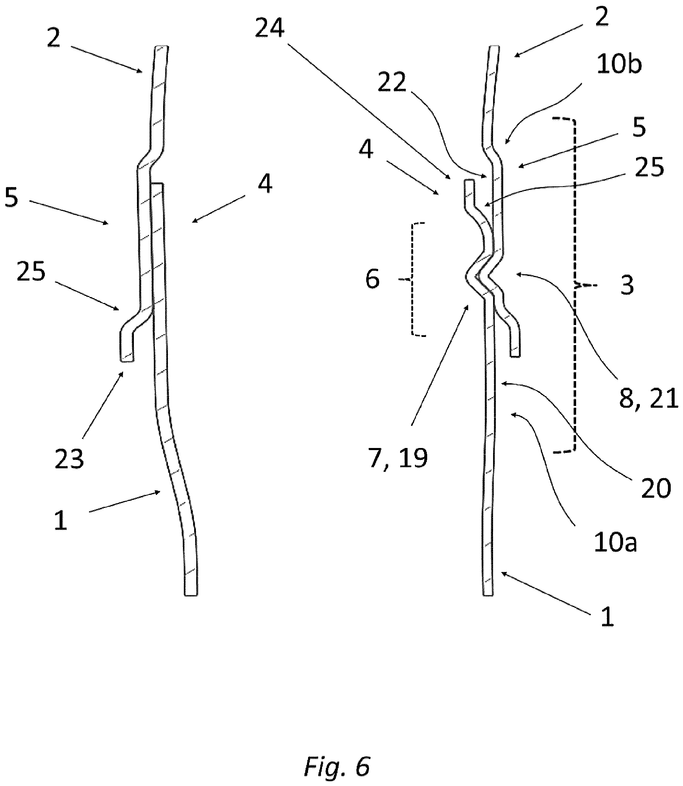

Die Verbindungsabschnitte 4, 5 sind über wenigstens eine im Verbindungsbereich 3 vorgesehene Rastverbindung 6 lösbar miteinander verbunden (vgl. Fig. 4 und Fig. 6), wobei die Rastverbindung 6 aus einem in dem ersten Verbindungsabschnitt 4 ausgeformten Rastelement 7 und einem in dem zweiten Verbindungsabschnitt 5 ausgeformten Gegenrastelement 8 gebildet ist. Die Verbindungsabschnitte 4, 5 weisen einander entsprechende polygonale Querschnitte mit jeweils wenigstens zwei Ecken 9a, 9b, 10a, 10b, 11a, 11b, 12a, 12b auf, wobei das Rastelement 7 und das Gegenrastelement 8 jeweils auf wenigstens einer der jeweiligen, aneinander anliegenden Ecken 9a, 9b, 10a, 10b der Verbindungsabschnitte 4, 5 angeordnet sind.

In den Fig. 1, Fig. 2 und Fig. 5 ist erkennbar, dass in dem gemeinsamen Verbindungsbereich 3 zusätzlich wenigstens ein Anschlagssystem 13 aus einem in dem ersten Verbindungsabschnitt 4 ausgeformten Anschlagelement 14 und einem in dem zweiten Verbindungsabschnitt 5 ausgeformten Gegenanschlagelement 15 vorgesehen ist. Das Anschlagselement 14 und das Gegenanschlagselement 15 sind ebenfalls auf wenigstens einer der jeweiligen, aneinander anliegenden Ecken 11a, 11b, 12a, 12b der Ver-bindungsabschnitte 4, 5 angeordnet, wobei die Rastverbindung 6 und das Anschlagssystem 13 so aufeinander abgestimmt sind, dass nach dem Einrasten der Rastverbindung 6 das Anschlagselement 14 und das Gegenanschlagselement 15 eine definierte Endposition der Rastverbindung 6 vorgeben, um ein Überrasten der Rastverbindung 6 zu verhindern. Das Gegenanschlagselement 15 ist als eine lokale Einbuchtung der Außenfläche 16 des zweiten Verbindungsabschnitts 5 im Bereich der jeweiligen Ecke 11b, 12b, und das Anschlagselement 14 als ein, an einen abgeflachten Bereich 17 der jeweiligen Ecke 11a, 12a des ersten Verbindungsabschnitts 4 anschließender Rücksprung 18 auf die ursprüngliche Höhe der Ecke 11a, 12a ausgebildet.

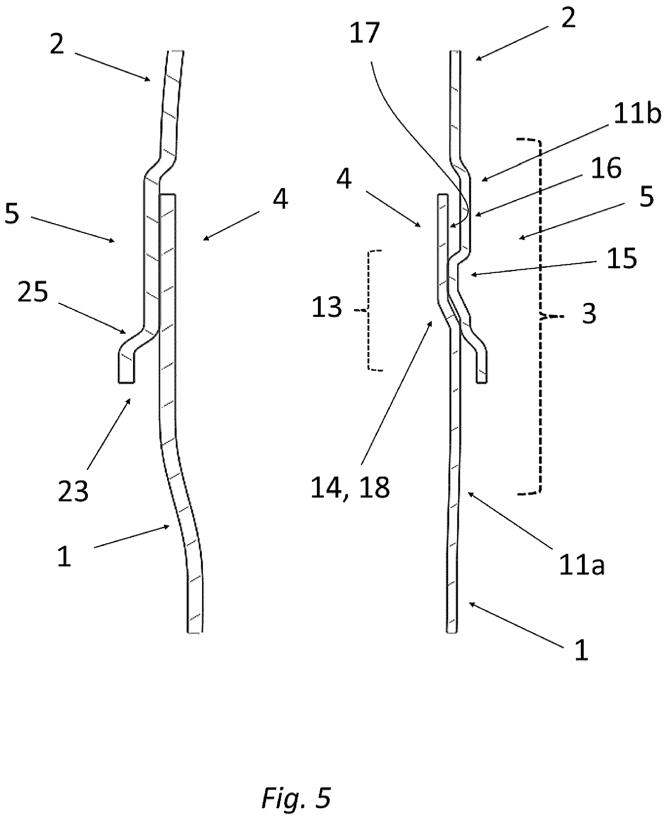

In den Fig. 5 und Fig. 6 ist erkennbar, dass das jeweilige Rastelement 7 und das jeweilige Gegenrastelement 8, sowie das Anschlagelement 14 und das Gegenanschlagelement 15 einstückig mit den entsprechenden Verbindungsabschnitten 4, 5 ausgeformt sind.

Die Fig. 3, Fig. 4 und fig. 6 zeigen am deutlichsten, dass das Rastelement 7 durch eine lokale Einbuchtung 19 der Außenfläche 20 des ersten Verbindungsabschnittes 4 und das Gegenrastelement 8 durch eine lokale Ausbuchtung 21 der Innenfläche 22 des zweiten Verbindungsabschnittes 5 gebildet ist. Die Einbuchtung 19 und die Ausbuchtung 21 sind hierbei linienförmig ausgebildet. Die linienförmige Einbuchtung 19 und die linienförmige Ausbuchtung 21 sind parallel zum Öffnungsrand 23, 24 des entsprechenden Verbindungsabschnittes 4, 5 orientiert.

Zur vereinfachten Verbindbarkeit der Luftführungskanäle 1, 2 weisen der Öffnungsrand 23 des außenliegenden zweiten Luftführungskanals 2 und der Öffnungsrand 24 des innenliegenden ersten Luftführungskanals 1 zumindest abschnittsweise eine Einführschräge 25 auf.

Beide Luftführungskanäle 1, 2 sind aus einem thermoplastischen Kunststoff gebildet.

In Fig. 3 ist gezeigt, dass die Verbindungsabschnitte 4, 5 einander entsprechende polygonale Querschnitte mit jeweils vier Ecken 9a (verdeckt), 9b, 10a, 10b, 11a, 11b, 12a, 12b aufweisen, wobei das Rastelement 7 und das Gegenrastelement 8 jeweils auf wenigstens zwei der jeweiligen, aneinander anliegenden Ecken 9a, 9b, 10a, 10b der Verbindungsabschnitte 4, 5 angeordnet sind, wobei sich diese Ecken 9a, 9b, 10a, 10b diagonal gegenüberliegen.

Eine an sich bekannte Belüftungs-Heizungs- oder Klimaanlage eines Fahrzeuges mit zumindest einem Gebläse, zumindest einem Luftstromsteuerelement und ggf. zumindest einem Wärmetauscher kann ein Luftführungssystem wie vorstehend beschrieben aufweisen.

## Patentansprüche

1. Luftführungssystem für ein Fahrzeug, umfassend wenigstens zwei in einem Blasformungsverfahren oder 2-Platten-Thermoformungsverfahren hergestellte Luftführungskanäle (1, 2),
wobei sich die Luftführungskanäle (1, 2) in einem gemeinsamen Verbindungsbereich (3) derart überlappen, dass ein erster Verbindungsabschnitt (4) des ersten Luftführungskanals (1) von einem zweiten Verbindungsabschnitt (5) des zweiten Luftführungskanals (2) umschlossen ist und,
wobei die Verbindungsabschnitte (4, 5) einander entsprechende polygonale Querschnitte aufweisen, und
wobei die Verbindungsabschnitte (4, 5) über wenigstens eine im Verbindungsbereich (3) vorgesehene Rastverbindung (6) lösbar miteinander verbunden sind,
wobei die Rastverbindung (6) aus einem in dem ersten Verbindungsabschnitt (4) ausgeformten Rastelement (7) und einem in dem zweiten Verbindungsabschnitt (5) ausgeformten Gegenrastelement (8) gebildet ist,
wobei die Verbindungsabschnitte (4, 5) einander entsprechende polygonale Querschnitte mit jeweils wenigstens zwei Ecken (9a, 9b, 10a, 10b, 11a, 11b, 12a, 12b) aufweisen, wobei das Rastelement (7) und das Gegenrastelement (8) jeweils auf wenigstens einer der jeweiligen, aneinander anliegenden Ecken (9a, 9b, 10a, 10b) der Verbindungsabschnitte (4, 5) angeordnet sind,
**dadurch gekennzeichnet, dass**
in dem gemeinsamen Verbindungsbereich (3) zusätzlich wenigstens ein Anschlagssystem (13) aus einem in dem ersten Verbindungsabschnitt (4) ausgeformten Anschlagelement (14) und einem in dem zweiten Verbindungsabschnitt (5) ausgeformten Gegenanschlagelement (15) vorgesehen ist, wobei
das Anschlagselement (14) und das Gegenanschlagselement (15) ebenfalls auf wenigstens einer der jeweiligen, aneinander anliegenden Ecken (11a, 11b, 12a, 12b) der Verbindungsabschnitte (4, 5) angeordnet sind, wobei die Rastverbindung (6) und das Anschlagssystem (13) so aufeinander abgestimmt sind, dass nach dem Einrasten der Rastverbindung (6) das Anschlagselement (14) und das Gegenanschlagselement (15) eine definierte Endposition der Rastverbindung (6) vorgeben, um ein Überrasten der Rastverbindung (6) zu verhindern.

2. Luftführungssystem nach Anspruch 1, **dadurch gekennzeichnet, dass** das Gegenanschlagselement (15) als eine lokale Einbuchtung der Außenfläche (16) des zweiten Verbindungsabschnitts (5) im Bereich der jeweiligen Ecke (11b, 12b), und das Anschlagselement (14) als ein, an einen abgeflachten Bereich (17) der jeweiligen Ecke (11a, 12a) des ersten Verbindungsabschnitts (4) anschließender Rücksprung (18) auf die ursprüngliche Höhe der Ecke (11a, 12a) ausgebildet ist.

3. Luftführungssystem nach Anspruch 1, **dadurch gekennzeichnet, dass** das jeweilige Rastelement (7) und das jeweilige Gegenrastelement (8), sowie das Anschlagelement (14) und das Gegenanschlagelement (15) einstückig mit den entsprechenden Verbindungsabschnitten (4, 5) ausgeformt sind.

4. Luftführungssystem nach einem der vorstehenden Ansprüche, **dadurch gekennzeichnet, dass** das Rastelement (7) durch eine lokale Einbuchtung (19) oder eine lokale Ausbuchtung der Außenfläche (20) des ersten Verbindungsabschnittes (4) und das Gegenrastelement (8) durch eine lokale Ausbuchtung (21) oder eine lokale Einbuchtung der Innenfläche (22) des zweiten Verbindungsabschnittes (5) gebildet ist.

5. Luftführungssystem nach Anspruch 4, **dadurch gekennzeichnet, dass** die Einbuchtung (19) und / oder die Ausbuchtung (21) linienförmig ausgebildet ist / sind.

6. Luftführungssystem nach Anspruch 5, **dadurch gekennzeichnet, dass** die linienförmige Einbuchtung (19) und / oder die linienförmige Ausbuchtung (21) parallel zum Öffnungsrand (23, 24) des entsprechenden Verbindungsabschnittes (4, 5) orientiert ist / sind.

7. Luftführungssystem nach einem der vorstehenden Ansprüche, **dadurch gekennzeichnet, dass** zur vereinfachten Verbindbarkeit der Luftführungskanäle (1, 2) der Öffnungsrand (23) des außenliegenden zweiten Luftführungskanals (2) und / oder der Öffnungsrand (24) des innenliegenden ersten Luftführungskanals (1) zumindest abschnittsweise eine Einführschräge (25) aufweist / aufweisen.

8. Luftführungssystem nach einem der vorstehenden Ansprüche, **dadurch gekennzeichnet, dass** die Luftführungskanäle (1, 2) aus einem thermoplastischen Kunststoff gebildet sind.

9. Luftführungssystem nach einem der vorstehenden Ansprüche, **dadurch gekennzeichnet, dass** die Verbindungsabschnitte (4, 5) einander entsprechende polygonale Querschnitte mit jeweils vier Ecken (9a, 9b, 10a, 10b, 11a, 11b, 12a, 12b) aufweisen, wobei das Rastelement (7) und das Gegenrastelement (8) jeweils auf wenigstens zwei der jeweiligen, aneinander anliegenden Ecken (9a, 9b, 10a, 10b) der Verbindungsabschnitte (4, 5) angeordnet sind, wobei sich diese Ecken (9a, 9b, 10a, 10b) diagonal gegenüberliegen.

10. Belüftungs- Heizungs- oder Klimaanlage eines Fahrzeuges mit zumindest einem Gebläse, zumindest einem Luftstromsteuerelement und gegebenenfalls zumindest einem Wärmetauscher, **dadurch gekennzeichnet, dass** die Anlage wenigstens ein Luftführungssystem nach einem der vorstehenden Ansprüche aufweist.
